# EUROPÄISCHE PATENTANMELDUNG

(11) **EP 2 090 790 A2**
(43) Veröffentlichungstag der Anmeldung: **19.08.2009**
(21) Anmeldenummer: 09001600.7
(22) Anmeldetag: 05.02.2009
(51) Int. Cl.: F16B 2/06

(54) **Befestigungsvorrichtung**

(30) Priorität: 12.02.2008 DE 102008008550; 12.02.2008 DE 202008001890 U
(71) Anmelder: Electraplan Solutions GmbH, 22869 Schenefeld (DE)
(72) Erfinder: Limbach, Frank, 53560 Vettelschoss (DE)
(74) Vertreter: Patentanwälte Buse, Mentzel, Ludewig

(57) **Zusammenfassung**

Die Erfindung betrifft eine Befestigungsvorrichtung zur variablen Befestigung von Versorgungseinheiten, insbesondere in Universalbodendosen, in Installationskanälen, in Hohlraumböden, in Doppelböden sowie artverwandten Fußbodenarten. Eine solche Befestigungsvorrichtung wird mit einer Schraube (20) am Gehäuse der Versorgungseinheit gehaltert. Die Befestigungsvorrichtung besitzt einen Haltebügel (40), der beweglich an der Schraube (20) gehalten ist und in Befestigungsposition gegen die Unterseite eines Bodens oder gegen die Wand einer Ausnehmung im Fußboden verspannt werden kann. Dieser Haltebügel ist zur Erzielung einer gewünschten Befestigungsposition vertikal und/oder horizontal verschiebbar und/oder verschwenkbar an der Schraube (20) angeordnet und besitzt mindestens einen Haltearm (41) mit endseitigem Schneidezahn (43), mit welchem der Haltebügel (40) in einer gewünschten Befestigungsposition mittels der Spannmutter (30) gegen die Unterseite eines Bodens verspannt werden kann (Fig. 1).

## Beschreibung

Die Erfindung betrifft eine Befestigungsvorrichtung zur variablen Befestigung von Versorgungseinheiten (Klappdeckel), beispielsweise in Universalbodendosen, in Installationskanäle, in Hohlraumböden, in Doppelböden oder artverwandten Fußbodenarten.

Derzeit sind die Versorgungseinheiten (Klappdeckel) mit unterschiedlichen, den speziellen Montageorten angepassten Befestigungsmitteln ausgerüstet. Das schliesst verschieden große Klammern und gehärtete Krallen ein. Für die unterschiedlichen Höhen der einzelnen möglichen Böden sind verschiedene Klammern notwendig. Zur Festlegung der Versorgungseinheit (Klappdeckel) in der Estrichplatte des Hohlraumbodens wird in der Regel eine gehärtete Kralle verwendet, die ebenfalls mittels einer Schraube gegen die Wandung des Hohlraumbodens verspannt wird. Der Nachteil besteht darin, dass bei Bestellung und Lieferung der Versorgungseinheiten (Klappdeckel) bereits der Montageort konkret benannt sein muss, um aufwendige Wechsel der Befestigungsmittel zu vermeiden.

Aufgabe der Erfindung ist es, die Befestigungsmöglichkeit einer Versorgungseinheit im Bodenbereich zu verbessern und die Nachteile des Standes der Technik zu überwinden.

Diese Aufgabe wird mit einer Befestigungsvorrichtung mit den Merkmalen des Anspruches 1 gelöst. Eine solche variabel einsetzbare Befestigungsvorrichtung dient der Festlegung einer Versorgungseinheit bei verschiedenen Einbausituationen im Bodenbereich. Die Befestigungsvorrichtung umfasst eine Schraube zur Halterung der Befestigungsvorrichtung am Gehäuse der Versorgungseinheit, einen Haltebügel und eine Spannmutter.

Vorzugsweise wird die Befestigungsvorrichtung mittels der zugehörigen Schraube an der Versorgungseinheit vormontiert. Hierfür werden am Gehäuse der Versorgungseinheit entsprechende Ausnehmungen vorgesehen, insbesondere besitzt ein solches Gehäuse an seiner umlaufenden Außenwand mehrere senkrecht verlaufende, eingeformte Kanäle. Bei einer besonders bevorzugten Ausführungsform sind jeweils zwei Kanäle diametral gegenüberliegend an der Außenwandung vorgesehen, so dass auch jeweils zwei diametral gegenüberliegende Befestigungsvorrichtungen montiert werden können. Es hat sich gezeigt, dass zur Festlegung einer Versorgungseinheit sechs Befestigungsvorrichtungen ausreichend sind, weniger als beim Stand der Technik. Die montierten Befestigungsvorrichtungen werden dabei im jeweiligen Kanal form- und/oder kraftschlüssig gehalten.

Die Befestigungsvorrichtung weist neben der Schraube einen an der Schraube beweglich gehaltenen Haltebügel auf. Dieser Haltebügel ragt vom Gewindebolzen der Schraube ab und lässt sich in Befestigungsposition gegen die Unterseite eines Bodens oder gegen die Wand einer Ausnehmung im Fußboden mittels der ebenfalls am Gewindebolzen der Schraube gehaltenen Spannmutter verspannen. Zur Erzielung der gewünschten Befestigungsposition lässt sich der Haltebügel zum einen vertikal entlang des Gewindebolzens der Schraube verschieben. Hat der Haltebügel eine bestimmte Höhe erlangt, kann der abragende Haltearm des Haltebügels zum anderen nach oben oder unten verschwenkt werden. Darüber hinaus ist in bestimmten Grenzen eine horizontale Verschiebbarkeit des Haltebügels möglich. Diese Beweglichkeit des Haltebügels ermöglicht es, den Haltebügel in eine gewünschte Befestigungsposition zu bringen, d.h. den Haltebügel gegen die Unterseite eines Bodens zu legen und mittels der Spannmutter zu verspannen oder den Haltearm gegen die Wand einer Ausnehmung im Fußboden zu legen und mittels der Spannmutter zu verspannen. Erfindungsgemäß ist am freien Ende des Haltebügels ein Schneidezahn vorgesehen. Mittels dieses Schneidezahns ist es beim Verspannen des Haltearms gegen die Wand einer Ausnehmung im Fußboden, beispielsweise eine Estrichplatte, möglich, die Festlegung durch das Einschneiden des Schneidzahns in die Wand der Bodenausnehmung zusätzlich zu unterstützen. Bei den bekannten Krallen aus dem Stand der Technik erfolgt ausschließlich ein Schaben der Kralle entlang der Wand der Bodenausnehmung. Bei der vorliegenden Erfindung wird neben dem Verspannen durch den Schneidezahn am Haltebügel eine schneidende Wirkung gegenüber der Wand der Ausnehmung erzielt und damit der Halt im Boden verbessert.

Eine Ausführungsform der Befestigungsvorrichtung besitzt einen Haltebügel mit zwei in gleicher Richtung abragenden Haltearmen, welche über eine Verbindungsplatte einstückig miteinander verbunden sind. Diese Verbindungsplatte besitzt ein Langloch, in welches der Gewindebolzen der Schraube der Befestigungsvorrichtung eingreift. Die Länge des Langlochs entspricht der maximalen Länge der möglichen horizontalen Bewegung des Haltebügels, da durch horizontale Verschiebung des Haltebügels dieser an den Enden des Langlochs anschlägt.

Bei einer besonders bevorzugten Ausführungsform der Befestigungsvorrichtung sind die Haltearme so an der Verbindungsplatte angeformt bzw. mit der Verbindungsplatte verbunden, dass die Längsachse der Verbindungsplatte und die Längsachse der Haltearme in einem spitzen Winkel zueinander verlaufen. Auf diese Weise weist die Befestigungsvorrichtung in der Montagelage, in welcher diese bedarfsweise am Gehäuse einer Versorgungseinheit vormontiert wird, eine möglichst geringe Breite auf. Die Befestigungsvorrichtungen können demzufolge in den Kanälen des Gehäuses einer Versorgungseinheit eingesetzt werden, wobei die Befestigungsvorrichtungen im Wesentlichen dann in den Kanälen aufgenommen sind, d.h. die Kanalöffnungen nicht überragen. Dies erleichtert das Einsetzen der mit den Befestigungsvorrichtungen bestückten Versorgungseinheit im Boden, in Bodendosen oder Installationskanälen. Anders als beim Stand der Technik, wo die Befestigungsklammern und -krallen den Umfangsrand der Versorgungseinheiten überragen. Dort ist beim Einsetzen einer Versorgungseinheit eine höhere Montagekraft erforderlich, um während des Montagevorgangs zum Anlegen der Klammer oder Kralle den Widerstand zu überwinden, der aufgrund der abragenden Klammer bzw. Kralle besteht. Oft führte das dazu, dass sich während des Einsetzens der Versorgungseinheit in die Einbauöffnungen die Befestigungsschrauben aus der Versorgungseinheit herausgeschoben haben. Diese Nachteile sind bei der vorliegenden Befestigungsvorrichtung überwunden. Ein weiterer Vorteil der erfindungsgemäßen Befestigungsvorrichtung kann bewirkt werden, wenn beim Einsetzen einer Versorgungseinheit, welche mit den erfindungsgemäßen Befestigungsvorrichtungen bestückt ist, dafür gesorgt wird, dass die Haltebügel nicht unbeabsichtigt nach außen schwenken. Dazu kann die Befestigungsvorrichtung im jeweiligen Kanal der Versorgungseinheit in Montageposition form- und/oder kraftschlüssig gehalten sein. Insbesondere werden im Kanal Rastmittel, vorzugsweise in Form von Rippen, Rastnasen oder Rasthaken, angeformt. Diese Rastmittel befinden sich vorzugsweise im Bereich des Ausgangs des Kanals, d.h. begrenzen die Öffnungen des Kanals. Die Rastmittel dienen demzufolge dazu, dass der Haltebügel in Montageposition gehalten wird und nicht nach oben verschwenken kann. Eine solche Schwenkbewegung würde bewirken, dass der Haltebügel aus dem Kanal herausschwenkt. Die Montageposition der Befestigungsvorrichtung in der Versorgungseinheit, d.h. der Befestigungsvorrichtung innerhalb des jeweiligen Kanals, wird während des Einsetzens der Versorgungseinheit in die entsprechende Montageöffnung des Bodens, der Bodendosen oder der Installationskanäle, beibehalten. Auf diese Weise lässt sich die Versorgungseinheit leichter montieren, da kein Widerstand überwunden werden muss. Des Weiteren erleichtert eine solche Halterung der Befestigungsvorrichtungen in der Montageposition den Transport einer solchen Versorgungseinheit. Bisher wurden vormontierte Versorgungseinheiten umfangsseitig mit einem Klebeband versehen, um die Befestigungsklammern oder Befestigungskrallen an der Versorgungseinheit zu sichern und eine Verletzungsgefahr durch unbeabsichtigtes Hervorstehen, beispielsweise der Krallen, zu verhindern. Auf ein solches Klebeband kann bei einer Anordnung von Rastmitteln im Kanal verzichtet werden. Zur platzsparenden Halterung im Kanal des Gehäuses der Versorgungseinheit trägt auch eine besondere vorteilhafte Ausgestaltung der Verbindungsplatte bei, indem diese an der zum Gehäuse weisenden Seite eine endseitige Abschrägung aufweist. An der gegenüberliegenden Seite, d.h. an der vom Gehäuse wegweisenden Seite der Verbindungsplatte besitzt die Verbindungsplatte einen nach oben abragenden Überstand. Dieser Überstand ist nicht mit den Haltearmen verbunden. Die Unterseite des Überstandes dient als Abstützfläche des Haltebügels, insbesondere in einer eingeschwenkten Position.

Für die Befestigungsvorrichtung wird eine besondere Spannmutter verwendet, die eine viereckige Grundplatte mit einer Gewindebohrung aufweist, wobei das Innengewinde der Gewindeplatte in Wirkverbindung mit dem Außengewinde des Gewindebolzens der zur Befestigungsvorrichtung gehörenden Schraube steht. Die viereckige Grundplatte ist an mindestens einer Seite nach oben zu einem Flansch geformt. Bei einer Ausführungsform, bei der Haltebügel zwei Haltearme besitzt, sind vorzugsweise an zwei gegenüberliegenden Seiten Flansche vorgesehen und zwar so, dass die zwei Flansche zusammen mit der Grundplatte eine U-Form ergeben. Die beiden Flansche ragen senkrecht nach oben von der Grundplatte ab und sind vorzugsweise einstückig mit der Grundplatte verbunden. Die Breite der Grundplatte ist dabei kleiner als der Abstand der Haltearme zueinander, so dass die Flansche zwischen die Haltearme eingreifen können.

In den verschiedenen Befestigungspositionen stützt sich die Verbindungsplatte des Haltebügels an den Flanschen der Spannmutter ab. Dazu weisen die Seitenkanten der Flansche eine entsprechende Kontur auf. Diese Kontur ermöglicht das Abstützen des Haltebügels in verschiedenen Befestigungslagen. Bei einer bevorzugten Ausführungsform sind die Seitenkanten, die bei Halterung der Befestigungsvorrichtung im Gehäuse der Versorgungseinheit jeweils zum Gehäuse weisen, ausgehend von der Grundplatte diagonal nach oben und zwar weg vom Gehäuse gerichtet. Die jeweils vom Gehäuse wegweisenden Seitenkanten der Flansche verlaufen ausgehend von der Grundplatte über einen gewissen Bereich senkrecht nach oben und im oberen Bereich zeigen sie eine Neigung zum Gehäuse hin. Der Übergang von der linken zur rechten Seitenkante eines Flansches ist vorzugsweise abgerundet, so dass am oberen Ende keine Spitze entsteht, sondern auch diese obere Abrundung als Abstützung der Verbindungsplatte dienen kann. Damit zeigen die Seitenflächen der Flansche eine nahezu dreieckförmige Form.

Die Erfindung wird nachfolgend an einem Ausführungsbeispiel anhand der Zeichnungen näher dargestellt. Es zeigen:
- Fig. 1: eine perspektivische Ansicht der erfindungsgemäßen Befestigungsvorrichtung in Montageposition,
- Fig. 2: eine perspektivische Ansicht der Befestigungsvorrichtung gemäß Fig. 1 mit ausgeschwenktem Haltebügel,
- Fig. 3: die Schnittdarstellung einer in einem estrichbündigen Kanal eingebauten Versorgungseinheit mit erfindungsgemäßer Befestigungsvorrichtung,
- Fig. 4: die Schnittdarstellung einer im Hohlraumboden eingesetzten Versorgungseinheit mit erfindungsgemäßer Befestigungs- vorrichtung,
- Fig. 5: die Schnittdarstellung einer im Doppelboden eingesetzten Versorgungseinheit mit erfindungsgemäßer Befestigungs- vorrichtung.

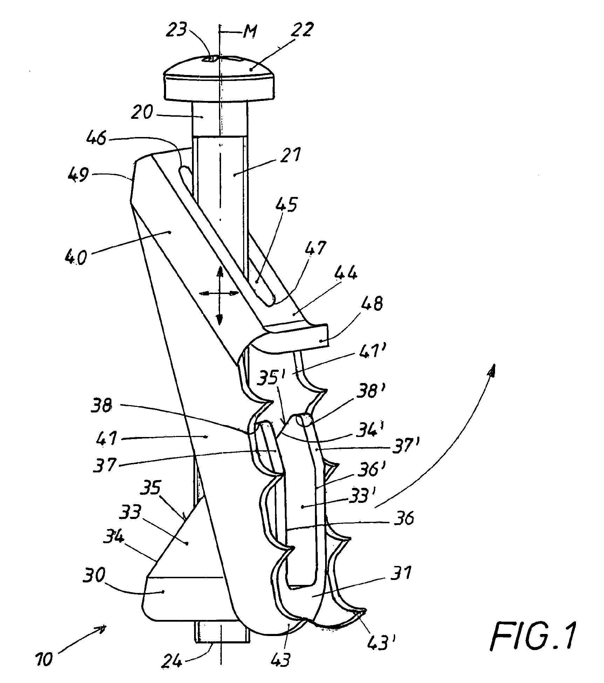

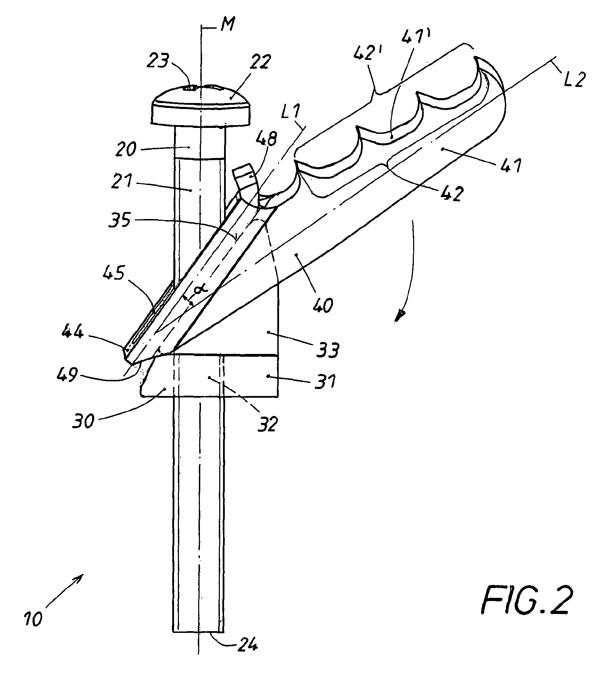

Die Fig. 1 und 2 zeigt eine Ausführungsform der erfindungsgemäßen Befestigungsvorrichtung 10. Diese Befestigungsvorrichtung 10 umfasst eine Schraube 20, eine Spannmutter 30 und einen Haltebügel 40.

Die Schraube 20 besitzt einen Kopf 22 mit einer geformten Vertiefung 23, beispielsweise ein Schlitz, ein Kreuzschlitz, eine Torx- oder eine andere geformte Ausnehmung. Der Kopf 22 der Schraube 20 ist mit einem Gewindebolzen 21 verbunden, welcher an seiner Unterseite mit einer geraden Abstützfläche 24 ausgestaltet ist, so dass die Schraube 20 sich auf einer ebenen Fläche abstützen kann. Das Außengewinde des Gewindebolzens 21 der Schraube 20 wirkt mit einem Innengewinde der Spannmutter 30 zusammen. Die Schraube 20 dient zur Festlegung der Befestigungsvorrichtung 10 in der entsprechenden Versorgungseinheit sowie zur Halterung des Haltebügels 40, der mittels Spannmutter 30 in verschiedenen Lagen positioniert werden kann. Durch die Drehung der Schraube 20 bei gleichzeitiger Abstützung der Schraube 20 auf einer ebenen Grundfläche bewegt sich die Spannmutter 30 aus der Montageposition, gezeigt in Fig. 1, entlang des Gewindebolzens 21 nach oben und nimmt dabei den Haltebügel 40 mit.

Der Haltebügel 40 besteht in diesem Ausführungsbeispiel aus zwei Haltearmen 41, 41', die beide an der gleichen Seite einer ebenen Verbindungsplatte 44 angeformt sind und zwar so, wie am besten aus Fig. 2 zu ersehen, dass die Längsachse L1 der Verbindungsplatte 44 im spitzen Winkel α zur Längsachse L2 der Haltearme 41, 41' steht. Diese Anordnung der Haltearme 41, 41' an der Verbindungsplatte 44 ermöglicht eine möglichst platzsparende Montageposition der Befestigungsvorrichtung 10, gezeigt in Fig. 1, da die Befestigungsvorrichtung 10 in diesem Fall eine geringe Breite zeigt. Zusätzlich kann an dem Ende der Verbindungsplatte 44, welches im montierten Zustand der Befestigungsvorrichtung 10 im Gehäuse 50 einer Versorgungseinheit in Richtung des Gehäuses 50 weist, eine Abschrägung 49 vorgesehen sein. Der Haltebügel 40 kann auf diese Weise in seiner Montageposition, siehe Fig. 1, noch ein Stück weiter eingeschwenkt werden.

Die Verbindungsplatte 44 des Haltebügels 40 ist des Weiteren von einem Langloch 45 durchsetzt. Die Enden des Langlochs 45 bilden jeweils einen Anschlag 46 bzw. 47. Die Länge des Langlochs 45 begrenzt damit die mögliche horizontale Bewegung des Haltebügels 40, da bei Bewegung des Haltebügels 40 nach rechts der Haltebügel 40 soweit verschoben werden kann, bis die Schraube 20 das Ende des Langlochs 45 erreicht und den Anschlag 46 berührt. Andererseits ist eine Bewegung des Haltebügels 40 in die entgegengesetzte Richtung, d.h. nach links, möglich, bis gleichfalls die Schraube 20 den Anschlag 47 berührt. Der Haltebügel 40 kann des Weiteren vertikal verschoben werden, nämlich entlang des Gewindebolzens 21 der Schraube 20. Auch diese Bewegung wird durch das Langloch 45 in der Verbindungsplatte 44 ermöglicht. Nach oben wird die vertikale Bewegung des Haltebügels 40 durch den Kopf 22 der Schraube 20 begrenzt und nach unten durch die jeweilige Lage der Spannmutter 30, die jedoch, wie bereits beschrieben, durch Drehen der Schraube 20 angehoben bzw. abgesenkt werden kann. Darüber hinaus lässt sich der Haltebügel 40 verschwenken. Ausgehend von der Montageposition, gezeigt in Fig. 1, kann der Haltebügel 40 nach oben geschwenkt werden, bis er in etwa die Position in Fig. 2 erreicht hat. Von hier aus ist nur noch ein geringes Verschwenken nach oben möglich, da dann ein Überstand 48, der eine Verlängerung der Verbindungsplatte 44 darstellt, am Gewindebolzen 21 der Schraube 20 anschlägt. Ein Zurückschwenken des Haltebügels 40 aus der Position gezeigt in Fig. 2 ist nicht möglich, da die Spannmutter 30 den Haltebügel 40 stützt. Wird jedoch die Spannmutter 30 durch Drehung der Schraube 20 nach unten bewegt, folgt der Haltebügel 40 durch vertikale Verschiebung. Wird jedoch andererseits der Haltebügel 40 in dieser ausgeschwenkten Position gehalten bis die Spannmutter 30 durch Drehung der Schraube 20 sich vom Haltebügel 40 nach unten entfernt hat, kann dieser anschließend in Pfeilrichtung von Fig. 2 verschwenken.

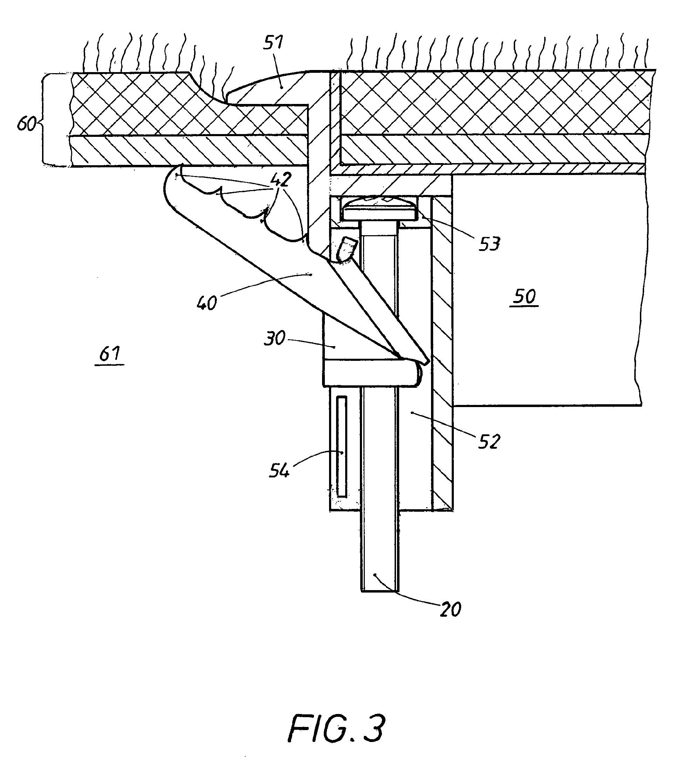

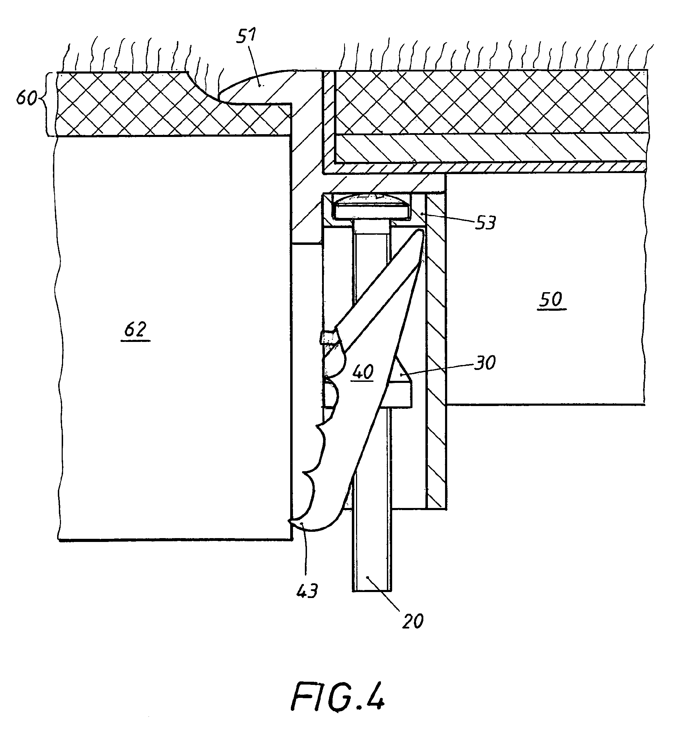

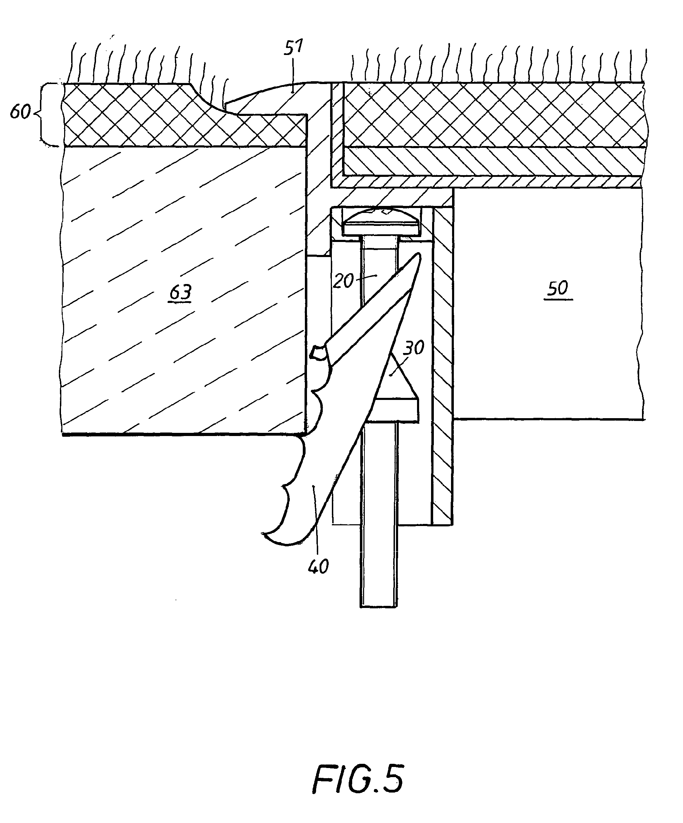

Um die Befestigungsvorrichtung 10 für verschiedene Festlegungsvarianten einer Versorgungseinheit verwenden zu können, ist an der Oberseite der Haltearme 41, 41' jeweils eine Zahnreihe 42, 42' vorgesehen, wobei insbesondere der äußere Zahn 43, 43' als Schneidezahn ausgebildet ist. Dieser äußere Schneidezahn 43, 43' wird, wie bei der aus dem Stand der Technik bekannten Kralle, zur Festlegung der Versorgungseinheit in einer Montageöffnung eines Hohlraumbodens, insbesondere zum Verspannen an den Wänden der Montageöffnung des Hohlraumbodens eingesetzt. Ein solcher Einsatz der Befestigungsvorrichtung 10 ist in Fig. 4 gezeigt. Deutlich sichtbar ist, dass der Schneidezahn 43 sich in die Wandung des Hohlraumbodens 62 einschneidet und damit neben der bestehenden Spannkraft eine zusätzliche Sicherung bietet. Die weiteren Zähne der Zahnreihe42, 42' kommen bei Verwendung der Befestigungsvorrichtung 10 zur Festlegung einer Versorgungseinheit in einem Doppelboden 63, gezeigt in Fig. 5, zum Einsatz. Je nach Dicke des Doppelbodens 63 kommt ein anderer Zahn der Zahnreihe 42, 42' zum Einsatz. Beim Stand der Technik waren drei unterschiedliche Klammern zu verwenden, nämlich eine Klammer für Stahlplatten mit einer Dicke von 5 mm bis 15 mm, eine weitere Klammer für einen Doppelboden 63 mit einer Dicke von 15 mm bis 35 mm und eine weitere Klammer für einen Doppelboden 63 mit einer Dicke von 35 mm bis 50 mm. Die Befestigungsvorrichtung 10 kann aufgrund der vorhandenen Zahnreihe 42, 42' mit den beabstandet vorgesehenen Zähnen für Doppelböden 63 mit einer Dicke von mm bis 50 mm eingesetzt werden. Bei einem Boden mit einer Dicke von 5 mm bis 15 mm handelt es sich in der Regel um einen estrichbündigen Kanal oder einen Aufbaubodenkanal, gezeigt in Fig. 3. Auch diese Anwendungsmöglichkeit wird durch die erfindungsgemäße Befestigungsvorrichtung 10 verwirklicht.

Egal in welchen Boden die Versorgungseinheit eingesetzt werden soll, in jedem Fall kann die Befestigungsvorrichtung 10 bereits in der Versorgungseinheit vormontiert werden. Dafür sind im Gehäuse 50 der Versorgungseinheit in der umlaufenden Gehäusewand Ausnehmungen für die Befestigungsvorrichtung 10 vorgesehen. Diese Ausnehmungen überragen die umlaufende Gehäusewand nicht, sie sind als senkrechte Kanäle 52 in die Gehäusewand des Gehäuses 50 eingelassen, vorzugsweise mit einem rechteckigen oder quadratischen Querschnitt, wobei die benachbart zur Kanalöffnung vorgesehenen Kanalwände mit Rastmitteln versehen werden. In der Fig. 3 sind im Kanal 52 an den Kanalseitenwänden Rippen 54 vorgesehen. Aufgrund der Schnittdarstellung in Fig. 3 ist ausschließlich eine Rippe 54 zu sehen. In der Montageposition befindet sich der Haltebügel 40 mit seinen Zahnreihen 42, 42' hinter der Rippe 54. Die Rippe 54 verhindert das Ausschwenken des Haltebügels 40 beim Transport und der Lagerung der Versorgungseinheit. Zur Montage der Versorgungseinheit wird diese in die entsprechende Öffnung im Boden eingesetzt, da kein Teil der Befestigungsvorrichtung 10 die Kanalöffnung überragt, ist das Einsetzen der Versorgungseinheit in die Öffnung im Boden 60 einfach zu bewerkstelligen. Anschließend wird durch Drehen der Schraube 20 die Spannmutter 30 solange verschoben, bis sie den Haltebügel 40 in Befestigungsposition gebracht hat. Dabei wird der Haltebügel 40 verschwenkt. Bei diesem Verschwenken wird die Rippe 54 zur Seite gedrückt oder gegebenenfalls abgeschert.

Die besondere Ausgestaltung der Spannmutter 30 ist besser in den Fig. 1 und 2 dargestellt. Die Spannmutter 30 besitzt eine ebene Grundplatte 31, in der sich die Gewindebohrung 32 befindet. Die Grundplatte 31 geht an ihren Seiten in senkrecht nach oben ragende Flansche 33, 33' über. Diese Flansche 33, 33' haben eine ausgewählte Kontur. So verlaufen die Seitenkanten 34, 34', die im eingebauten Zustand der Befestigungsvorrichtung 10 dem Gehäuse 50 zugewandt sind, diagonal nach oben. Der Verlauf der Seitenkanten 34, 34' ausgehend von der Grundplatte 31 ist demzufolge vom Gehäuse 50 weggerichtet. Die gegenüberliegenden Seitenkanten 36, 36' verlaufen über mehr als die Hälfte senkrecht nach oben. Im oberen Bereich weisen die Seitenkanten 36, 36' eine geringe Neigung auf. Diese Neigung ist zum Gehäuse 50 hingerichtet. Damit ergibt sich für die Seitenflächen der Flansche 33, 33' annähernd eine Dreiecksform. Die Seitenkanten 34, 35 bzw. 34', 35' laufen im oberen Bereich in einer Abrundung 38, 38' zusammen. Die schmalen ebenen Flächen der Seitenkanten 34, 34', 36, 36' bzw. der oberen Abrundung 38, 38' dienen zur Abstützung des Haltebügels 40 in verschiedenen Befestigungssituationen. Eine Befestigungslage ist beispielsweise in Fig. 2 gezeigt. Diese Befestigungssituation entspricht in etwa der Situation bei der Festlegung in einem estrichbündigen Kanal oder Aufbodenkanal, wie in Fig. 3 dargestellt. Ausgehend von der Montageposition, gezeigt in Fig. 1, verschiebt sich bei Drehung der Schraube 20 die Spannmutter 30 nach oben, dies aufgrund des Zusammenwirkens des Außengewindes des Gewindebolzens 21 mit dem Innengewinde der Gewindebohrung 32 der Spannmutter 30. Die Spannmutter 30 wird auf diese Weise soweit angehoben, bis die Abrundung 38, 38' gegen den Überstand 48 drückt. Dadurch wird der Haltebügel 40 nachfolgend beim weiteren Anheben der Spannmutter 30 verschwenkt. Dieser Haltebügel 40 legt sich mit seiner Verbindungsplatte 44 auf die Seitenkanten 34, 34' auf. Die schmalen ebenen Flächen dieser Seitenkanten 34, 34' dienen als Auflagefläche 35, 35'. Liegt in dieser Situation ein Zahn der Zahnreihe 42, 42' an der Unterseite eines Bodens 60 an, wie in Fig. 3 zu ersehen, ist eine sichere Befestigungsposition erzielt. Der Haltebügel 40 lässt sich in dieser Lage nicht mehr bewegen, nicht nach unten verschwenken, da die Verbindungsplatte 44 des Haltebügels 40 von der Spannmutter 30 gehalten wird, nämlich sich auf den Auflageflächen 35, 35' abstützt. Auch eine vertikale Bewegung nach unten ist damit nicht mehr möglich. Eine Bewegung des Haltebügels 40 nach oben wird durch den Bodenbelag 60 verhindert. Eine vertikale Bewegung ist ebenfalls nicht mehr möglich, da aufgrund des Zusammenwirkens der Unterseite der Verbindungsplatte 44 mit den Auflageflächen 35, 35' der Seitenkanten 34, 34' der Schraubmutter 30, die einen diagonalen Verlauf zeigen, ein horizontales Verschieben immer zu einer vertikalen Bewegung des Haltebügels 40 führen würde, die, wie bereits angegeben, nicht mehr möglich ist. Es ist damit eine Befestigungslage der Befestigungsvorrichtung 10 erreicht. Durch das Vorsehen mehrerer solcher Befestigungsvorrichtungen 10 in einer Versorgungseinheit wird damit eine Festlegung der Versorgungseinheit sicher gewährleistet.

Die Fig. 4 und 5 zeigen die Verwendung der gleichen Befestigungsvorrichtung 10 für andere Einbausituationen, nämlich in Fig. 4, beim Einbau des Gehäuses 50 der Versorgungseinheit in einer Öffnung des Hohlraumbodens 62. In diesem Fall kann die Befestigungsvorrichtung 10 aus ihrer Montageposition heraus nur geringfügig verschwenkt werden, bis sie die Wandung des Hohlraumbodens 62 berührt. Durch Weiterdrehen der Schraube 20 und damit Anziehen der Spannmutter 30 wird die Verbindungsplatte 44 in diesem Fall gegen die Anlageflächen 37, 37' der Seitenkanten 36, 36' gedrückt und die am freien Ende des Haltebügels 40 vorgesehenen Schneidezähne 43, 43' schneiden sich in die Wandung des Hohlraumbodens 62 ein. Die Befestigung wird damit durch das Verspannen und die schneidende Wirkung gewährleistet. In Fig. 5 wird die gleiche Befestigungsvorrichtung 10 zur Festlegung einer Versorgungseinheit in einem Doppelboden 63 verwendet. Die Befestigungsvorrichtung 10 war in gleicher Weise im Kanal 52 des Gehäuses 50 vormontiert. Durch Drehen der Schraube 20 wird die Spannmutter 30 angezogen. In diesem Fall kann der Haltebügel 40 weiter ausschwenken, bis ein Zahn der Zahnreihe 42, 42' die Unterseite des Doppelbodens 63 berührt. Durch das Untergreifen unter den Doppelboden 63 ist eine sichere Befestigung der Versorgungseinheit gewährleistet.

Nachdem eine Befestigungsvorrichtung 10 in Befestigungsposition gebracht wurde, können in gleicher Weise weitere Befestigungsvorrichtungen 10, die in weiteren Kanälen 52 des Gehäuses 50 der Versorgungseinheit vorgesehen sind, durch Drehen der jeweiligen Schraube 20 in Befestigungsposition gebracht werden, vorzugsweise sind für eine runde Bodendose sechs Befestigungsvorrichtungen 10 vorgesehen, wobei immer zwei Befestigungsvorrichtungen 10 diametral gegenüberliegen. Nachdem sämtliche Befestigungsvorrichtungen 10 in Befestigungsposition gebracht sind, kann der Deckel, die Deckelplatte oder, wie in diesem Fall, eine Stahlplatte 51 aufgesetzt werden und die Versorgungseinheit ist damit abgedeckt.

Der besondere Vorteil der erfindungsgemäßen Befestigungsvorrichtung 10 besteht darin, dass eine Versorgungseinheit, die mit diesen Befestigungsvorrichtungen 10 ausgerüstet ist, in Öffnungen unterschiedlicher Böden 60, 62, 63 eingesetzt werden kann. Es wird ausschließlich eine Befestigungsvorrichtung 10 für die unterschiedlichen Anwendungsfälle benötigt, im Vergleich zu mindestens vier unterschiedlichen Befestigungsmitteln beim Stand der Technik, nämlich drei Klammern für unterschiedliche Plattenstärken der gängigen Doppelböden bzw. Stahlplatten und für die Festlegung mittels einer Kralle im Hohlraumboden. Des Weiteren vereinfacht sich die Montage der Versorgungseinheit. Der Kunde muss sich jetzt nicht mehr vorher entscheiden, welches Befestigungsmittel an der anzuliefernden Versorgungseinheit montiert sein muss. Er kann ohne Zeitverzug die Versorgungseinheit in die Öffnung des Bodens einsetzen. Zusätzlich reduziert sich die Lagerhaltung, da nur eine Befestigungsvorrichtung 10 anstatt von 4 Befestigungsmitteln bevorratet werden muss. Auch der Transport der mit Befestigungsvorrichtungen 10 bestückten Versorgungseinheiten ist aufgrund vorhandener Rastmittel unproblematischer und birgt weniger Verletzungsgefahren.

Die Erfindung ist nicht auf das Ausführungsbeispiel beschränkt. Es sind vielmehr weitere Ausgestaltungen des Erfindungsgegenstandes denkbar. Der Schutzumfang richtet sich ausschließlich nach den nachfolgenden Ansprüchen.

### Bezugszeichenliste:

- 10: Befestigungsvorrichtung
- 20: Schraube
- 21: Gewindebolzen
- 22: Kopf
- 23: Vertiefung
- 24: Abstützung
- 30: Spannmutter
- 31: Grundplatte
- 32: Gewindebohrung
- 33,33': Flansch
- 34,34': Seitenkante
- 35,35': Auflagefläche
- 36,36': Seitenkante
- 37,37': Anlagefläche
- 38,38': Abrundung
- 40: Haltebügel
- 41,41': Haltearm
- 42,42': Zahnreihe
- 43,43': Schneidzahn
- 44: Verbindungsplatte
- 45: Langloch
- 46,47: Anschlag
- 48: Überstand
- 49: Abschrägung
- 50: Gehäuse
- 51: Stahlplatte
- 52: Kanal
- 53: Aufnahme
- 54: Rippe
- 60: Bodenbelag
- 61: Aufbodenkanal
- 62: Hohlraumboden
- 63: Doppelboden

- L 1: Längsachse von 44
- L2: Längsachse von 41
- M: Mittelachse von 30
- α: Winkel zwischen L1, L2

## Patentansprüche

1. Befestigungsvorrichtung zur variablen Befestigung einer Versorgungseinheit, insbesondere in Universalbodendosen, in Installationskanälen, in Hohlraumböden, in Doppelböden sowie artverwandten Fußbodenarten,
mit einer Schraube (20) zur Halterung der Befestigungsvorrichtung (10) am Gehäuse (50) der Versorgungseinheit,
mit einem Haltebügel (40), der beweglich an der Schraube (20) gehalten ist und in Befestigungsposition gegen die Unterseite eines Bodens oder gegen die Wand einer Ausnehmung im Fußboden verspannt werden kann,
**dadurch gekennzeichnet, dass**
der Haltebügel (40) zur Erzielung einer gewünschten Befestigungsposition vertikal und/oder horizontal verschiebbar und/oder verschwenkbar an der Schraube (20) angeordnet ist,
wobei der Haltebügel (40) mindestens einen Haltearm (41) besitzt, mit welchem der Haltebügel (40) in einer gewünschte Befestigungsposition mittels einer Spannmutter (30) gegen die Unterseite eines Bodens verspannt werden kann,
wobei zumindest am freien Ende des Haltearms (41) ein Schneidezahn (43) vorgesehen ist, mit welchem der Haltebügel (40) in einer gewünschte Befestigungsposition mittels einer Spannmutter (30) gegen und /oder in die Wand einer Ausnehmung im Fußboden gedrückt werden kann.

2. Befestigungsvorrichtung nach Anspruch 1, **dadurch gekennzeichnet, dass** der Haltebügel (40) zwei Haltearme (41, 41') besitzt, welche über eine Verbindungsplatte (44) einstückig miteinander verbunden sind, wobei ein Gewindebolzen (21) der Schraube (20) in ein an der Verbindungsplatte (44) vorgesehenes Langloch (45) eingreift, wobei die horizontale Bewegung des Haltebügels (40) durch die Länge des Langlochs (45) begrenzt ist.

3. Befestigungsvorrichtung nach Anspruch 2, **dadurch gekennzeichnet, dass** die Längsachse der Verbindungsplatte (44) und die Längsachse der Haltearme (41, 41') in einem spitzen Winkel (α) zueinander verlaufen.

4. Befestigungsvorrichtung nach einem der Ansprüche 2 oder 3, **dadurch gekennzeichnet, dass** an der Oberseite des Haltearms (41, 41') eine Zahnreihe (42, 42') vorgesehen ist.

5. Befestigungsvorrichtung nach einem der Ansprüche 2 bis 4, **dadurch gekennzeichnet, dass** zur platzsparenden Halterung im Gehäuse (50) der Versorgungseinheit die Verbindungsplatte (44) an der zum Gehäuse (50) weisenden Seite eine Abschrägung (49) besitzt.

6. Befestigungsvorrichtung nach einem der Ansprüche 2 bis 5, **dadurch gekennzeichnet, dass** die Verbindungsplatte (44) an der vom Gehäuse (50) wegweisenden Seite einen nach oben abragenden Überstand (48) besitzt, der nicht mit den Haltearmen (41. 41') verbunden ist.

7. Befestigungsvorrichtung nach einem der Ansprüche 1 bis 6, **dadurch gekennzeichnet, dass** die Spannmutter (30) eine viereckige Grundplatte (31) mit einer Gewindebohrung (32) besitzt, wobei das Innengewinde der Gewindeplatte (31) in Wirkverbindung mit dem Außengewinde des Gewindebolzens (21) der Schraube (20) steht und von der viereckige Grundplatte (31) der Spannmutter (30) benachbart zur Gewindebohrung (32) zwei Flansche (33, 33') senkrecht nach oben abragen, die einstückig mit der Grundplatte (32) verbunden sind.

8. Befestigungsvorrichtung nach Anspruch 7, **dadurch gekennzeichnet, dass** die Breite der viereckigen Grundplatte (31) der Spannmutter (30) kleiner ist als der Abstand der Haltearme (41, 41'), so dass die Flansche (33, 33') in Befestigungsposition zwischen die Haltearme (41, 41') eingreifen können.

9. Befestigungsvorrichtung nach Anspruch 8, **dadurch gekennzeichnet, dass** die jeweils zum Gehäuse (50) weisende Seitenkante (34, 34') der Flansche (33, 33') ausgehend von der Grundplatte (31) diagonal nach oben und zwar weg vom Gehäuse verläuft und die schmalen Flächen dieser Seitenkanten als Auflageflächen (35, 35') für den Haltebügel (40) in Befestigungsposition dienen.

10. Befestigungsvorrichtung nach Anspruch 9, **dadurch gekennzeichnet, dass** die jeweils vom Gehäuse (50) wegweisende Seitenkante (36, 36') der Flansche (33, 33') ausgehend von der Grundplatte (31) senkrecht nach oben verlaufen und im oberen Bereich eine zum Gehäuse (50) weisende Neigung aufweisen, wobei die schmalen Flächen dieser geneigten Bereiche der Seitenkanten (36, 36') als Anlageflächen (37, 37') für den Haltebügel (40) in Befestigungsposition dienen.

11. Befestigungsvorrichtung nach Anspruch 9 oder 10, **dadurch gekennzeichnet, dass** die der Übergang von Auflageflächen (35, 35') zu den Anlageflächen (37, 37') jeweils als Abrundung (38, 38') ausgestaltet ist.

12. Befestigungsvorrichtung nach einem der Ansprüche 9 bis 11, **dadurch gekennzeichnet, dass** in unterschiedlichen Befestigungspositionen die Verbindungsplatte (44) sich mit ihrer Unterseite auf den Auflageflächen (35, 35') oder den Anlageflächen (37, 37') der Spannmutter (30) abstützt.

13. Versorgungseinheit mit einem Gehäuse (50), welches zur Aufnahme von Befestigungsvorrichtungen (10) an seiner Außenwand mehrere senkrecht verlaufende, eingeformte Kanäle (52) besitzt.

14. Versorgungseinheit nach Anspruch 13, **dadurch gekennzeichnet, dass** jeweils zwei Befestigungsvorrichtungen (10) diametral gegenüberliegend angeordnet sind, wobei vorzugsweise sechs Befestigungsvorrichtungen (10) am Gehäuse (50) vormontiert sind.

15. Versorgungseinheit nach einem der Ansprüche 13 oder 14, **dadurch gekennzeichnet, dass** in Montageposition die Befestigungsvorrichtungen (10) im jeweiligen Kanal (52) form- und/oder kraftschlüssig gehalten sind, wobei vorzugsweise die Haltebügel (40) der Befestigungsvorrichtungen (10) durch im Kanal (52) angeformte Rastmittel gehalten werden, besonders bevorzugt durch Rippen (54), die im Bereich des Ausgangs des Kanals (52) angeformt sind.
